(19) Europäisches Patentamt
European Patent Office
Office européen des brevets

(11) **EP 4 518 168 A1**

(12) **EUROPEAN PATENT APPLICATION**

(43) Date of publication:
**05.03.2025 Bulletin 2025/10**

(21) Application number: **24197135.7**

(22) Date of filing: **29.08.2024**

(51) International Patent Classification (IPC):
$H04B\ 1/10^{(2006.01)}$      $H04B\ 5/00^{(2024.01)}$
$H04B\ 7/00^{(2006.01)}$

(52) Cooperative Patent Classification (CPC):
**H04B 1/10; H04B 5/45; H04B 7/00; H04W 48/18**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.08.2023 GB 202313169**

(71) Applicant: **Nokia Technologies Oy
02610 Espoo (FI)**

(72) Inventors:
• **BARBU, Oana-Elena
Aalborg (DK)**
• **KIILERICH PRATAS, Nuno Manuel
Aalborg (DK)**
• **VEJLGAARD, Benny
Gistrup (DK)**
• **HARREBEK, Johannes
Aalborg (DK)**
• **SVENDSEN, Simon
Aalborg (DK)**

(74) Representative: **Nokia EPO representatives
Nokia Technologies Oy
Karakaari 7
02610 Espoo (FI)**

(54) **METHOD FOR ACTIVATOR-TAG POST-TRANSMISSION ORTHOGONALIZATION**

(57) An apparatus configured to: receive at least one reference signal from a second apparatus in connection with a session of a third apparatus; determine a combiner, wherein the determined combiner is configured for reading the third apparatus; receive at least one activation signal and a reply signal, wherein the at least one activation signal is received from the second apparatus, wherein the reply signal is received from the third apparatus; and apply the determined combiner to the at least one activation signal and the reply signal.

FIG. 6

**Description**

TECHNICAL FIELD

The example and non-limiting embodiments relate generally to devices that require activation signals and, more particularly, to isolation of such signals from signals in reply to activation.

BACKGROUND

It is known, in the field of Internet of Things (IoT) devices, to activate an IoT device with an activation signal.

SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: receive at least one reference signal from a second apparatus in connection with a session of a third apparatus; determine a combiner, wherein the determined combiner is configured for reading the third apparatus; receive at least one activation signal and a reply signal, wherein the at least one activation signal is received from the second apparatus, wherein the reply signal is received from the third apparatus; and apply the determined combiner to the at least one activation signal and the reply signal.

In accordance with one aspect, a method comprising: receiving, with a first apparatus, at least one reference signal from a second apparatus in connection with a session of a third apparatus; determining a combiner, wherein the determined combiner is configured for reading the third apparatus; receiving at least one activation signal and a reply signal, wherein the at least one activation signal is received from the second apparatus, wherein the reply signal is received from the third apparatus; and applying the determined combiner to the at least one activation signal and the reply signal.

In accordance with one aspect, an apparatus comprising means for: receiving at least one reference signal from a second apparatus in connection with a session of a third apparatus; determining a combiner, wherein the determined combiner is configured for reading the third apparatus; receiving at least one activation signal and a reply signal, wherein the at least one activation signal is received from the second apparatus, wherein the reply signal is received from the third apparatus; and applying the determined combiner to the at least one activation signal and the reply signal.

In accordance with one aspect, a non-transitory computer-readable medium comprising program instructions stored thereon for performing at least the following: causing receiving of at least one reference signal from a second apparatus in connection with a session of a third apparatus; determining a combiner, wherein the determined combiner is configured for reading the third apparatus; causing receiving of at least one activation signal and a reply signal, wherein the at least one activation signal is received from the second apparatus, wherein the reply signal is received from the third apparatus; and applying the determined combiner to the at least one activation signal and the reply signal.

According to some aspects, there is provided the subject matter of the independent claims. Some further aspects are defined in the dependent claims.

BRIEF DESCRIPTION OF THE DRAWINGS

The foregoing aspects and other features are explained in the following description, taken in connection with the accompanying drawings, wherein:

FIG. 1 is a block diagram of one possible and non-limiting example system in which the example embodiments may be practiced;

FIG. 2 is a diagram illustrating features as described herein;

FIG. 3 is a diagram illustrating features as described herein;

FIG. 4 is a diagram illustrating features as described herein;

FIG. 5 is a diagram illustrating features as described herein;

FIG. 6 is a diagram illustrating features as described herein;

FIG. 7 is a diagram illustrating features as described herein;

FIG. 8 is a diagram illustrating features as described herein; and

FIG. 9 is a flowchart illustrating steps as described herein.

DETAILED DESCRIPTION OF EMBODIMENTS

The following abbreviations that may be found in the specification and/or the drawing figures are defined as follows:

| | |
|---|---|
| 3GPP | third generation partnership project |
| 5G | fifth generation |
| 5GC | 5G core network |
| ACR | activator reader channel |
| A-IoT | ambient IoT |
| AMF | access and mobility management function |
| AR | autoregressive |
| AT | activator-to-tag |
| BS | base station |
| CN | core network |
| CNN | convolutional neural network |
| cRAN | cloud radio access network |
| CU | central unit |
| D2D | device-to-device |
| DNN | deep neural network |
| DRX | discontinuous reception |
| DU | distributed unit |
| eMTC | enhanced machine-type communication |
| eNB (or eNodeB) | evolved Node B (e.g., an LTE base station) |
| EN-DC | E-UTRA-NR dual connectivity |
| en-gNB or En-gNB | node providing NR user plane and control plane protocol terminations towards the UE, and acting as secondary node in EN-DC |
| E-UTRA | evolved universal terrestrial radio access, i.e., the LTE radio access technology |
| FDD | frequency division duplex |
| gNB (or gNodeB) | base station for 5G/NR, i.e., a node providing NR user plane and control plane protocol terminations towards the UE, and connected via the NG interface to the 5GC |
| IAB | integrated access and backhaul |
| I/F | interface |
| IoT | Internet of Things |
| L1 | layer 1 |
| LoRa or LORA | long range |
| LTE | long term evolution |
| MAC | medium access control |
| MME | mobility management entity |
| MSE | mean squared error |
| MT | mobile termination |
| ng or NG | new generation |
| ng-eNB or NG-eNB | new generation eNB |
| NN | neural network |
| NR | new radio |
| N/W or NW | network |
| OFDM | orthogonal frequency division multiplex |
| O-RAN | open radio access network |
| PDCP | packet data convergence protocol |
| PHY | physical layer |
| ProSe | proximity service |
| RAN | radio access network |

| | | |
|---|---|---|
| RedCap | reduced capability | |
| RF | radio frequency | |
| RFID | radio frequency identification | |
| RLC | radio link control | |
| RRC | radio resource control | |
| RRH | remote radio head | |
| RS | reference signal | |
| RSU | roadside unit | |
| RU | radio unit | |
| Rx | receiver | |
| SA | standalone | |
| SDAP | service data adaptation protocol | |
| SGW | serving gateway | |
| SID | study item | |
| SINR | signal to interference plus noise ratio | |
| SIR | signal to interference ratio | |
| SL | sidelink | |
| SMF | session management function | |
| TDD | time division duplex | |
| TSI | time-selectivity information | |
| TT | tag-to-tag | |
| Tx | transmitter | |
| UE | user equipment (e.g., a wireless, typically mobile device) | |
| UPF | user plane function | |
| UWB | ultra-wideband | |
| V2I | vehicle to infrastructure | |
| V2N | vehicle to network | |
| V2P | vehicle to pedestrian | |
| V2V | vehicle to vehicle | |
| V2X | vehicle to everything | |
| VNR | virtualized network function | |
| ZF | zero-forcing | |

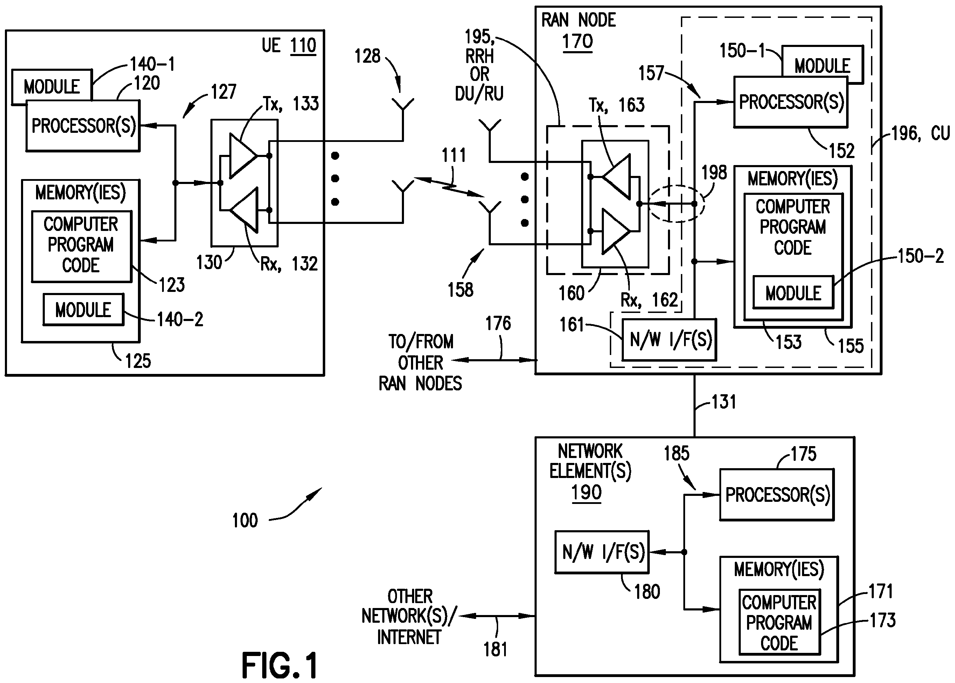

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element(s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element(s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to Internet of Things (IoT) devices, procedures, and/or use cases. Regarding IoT applications, 3GPP has specified NB-IoT/eMTC and NR RedCap before R18 to satisfy the requirements on low cost and low power devices for wide area IoT communication. These IoT devices usually consume tens or hundreds of milliwatts power during transceiving (i.e. transmitting and/or receiving), while the cost is a few dollars. However, to achieve the internet of everything, IoT devices with ten or even a hundred times lower cost and power consumption are needed, especially for a large number of applications requiring battery-less devices.

The number of IoT connections has been growing rapidly in recent years and is predicted to be hundreds of billions by 2030. With more and more 'things' expected to be interconnected for improving production efficiency and increasing comforts of life, it demands further reduction of size, cost, and power consumption for IoT devices. In particular, regular replacement of battery for all the IoT devices is impractical due to the tremendous consumption of materials and manpower. It has become a trend to use energy harvested from environments to power IoT devices for self-sustainable communications, especially in applications with a huge number of devices (e.g., ID tags and sensors).

The most critical issue with existing 3GPP technologies for the target use cases (i.e. IoT) is the capability of cooperating with energy harvesting considering limited device size. Cellular devices usually consume tens or even hundreds of milliwatts of power for transceiver processing. Taking the NB-IoT module as an example, the typical current consumption for receive processing is about 60mA with supply voltage higher than 3.1V, and 70mA for transmitting processing at 0dBm transmit power. Furthermore, the output power provided by the typical energy harvester is mostly below 1 milliwatt, considering the small size of a few square centimeters for practical devices. Since the available power is far less than the consumed power, it is impractical to power cellular devices directly by energy harvesting in most cases.

One possible solution is to integrate energy harvesting with rechargeable battery or supercapacitor. However, there are still a few problems to be solved.

Firstly, both rechargeable battery and supercapacitor may suffer from a shortened lifetime in practical cases. It is hard to provide constant charging current or voltage by energy harvesting, while longtime continuous charging is needed due to the very small output power from the energy harvester. Inconstant charging current and longtime continuous charging are both harmful to battery life. For a supercapacitor, its lifetime will be significantly reduced in high temperature environments (e.g., less than 3 years at 50 degrees centigrade).

Secondly, device size will be significantly increased. As a small size button battery can only provide a current of a few tens of milliamps, a battery with a much larger size (e.g., AA battery) is usually used to power cellular devices, whose size can be even larger than the module itself. To store energy for a proper duration of working (e.g., one second), the required capacitance of a supercapacitor is at the level of a hundred mill-farads. The size of such supercapacitors may be larger than an NB-IoT module.

Thirdly, both rechargeable batteries and supercapacitors can be more expensive than the module itself. Even purchased in large quantities, the cost of a suitable battery or supercapacitor may reach one or a few dollars, which nearly doubles the cost of the device.

Radio frequency identification (RFID) is the most well-known technology supporting battery less tags (devices). The power consumption of commercial passive RFID tags can be as low as 1 microwatt. The key techniques enabling such low power consumption are envelope detection for downlink data reception, and backscatter communication for uplink data transmission.

RFID is designed for short-range communications, whose typical effective range is less than 10 meters. As the air interface of RFID almost remains unchanged since 2005, the too-simple transmission scheme becomes an obstacle to improving its link budget and capability of supporting a scalable network.

Attracted by the extremely low power consumption of backscatter communication, many non-3GPP technologies begin to put efforts into related research, such as Wi-Fi, Bluetooth, ultra-wideband (UWB), and long range (LORA). Various research show that a few or tens of microwatts power consumption can be supported for passive tags based on or with small modifications to the above air interfaces.

A significant proportion of the studies target long range communication. Among them, a LoRa tag implemented with commercial off-the-shelf components can send its sensing data to the receiver of 381 meters away. Currently, most of the studies are focusing on independent detailed techniques for various optimization targets. It is hard to see a comprehensive system design fully meeting the requirements of the target use cases (i.e. IoT). However, the standardization of those technologies is agile and quick, as the industries usually follow some de facto standards. Accordingly, many products in the market will follow even a private standard once it shows competitiveness in some applications.

A passive radio is a device that harnesses energy from wireless signals sent on specific carriers and/or bandwidths and charges a simple circuitry that, once activated, will emit/reflect a signal which encodes at least the ID of the passive radio. The typical system architecture around a passive radio consists of:

[0036]  - An activator: a device that sends an activation signal targeted at waking up the passive radio. In the present disclosure, the terms "activator", "activator radio", "activation device", "second apparatus", and "second radio equipment" may be used interchangeably.

[0037]  - The passive radio: harnesses energy over a range of frequencies and listens for activation signals. Once such a signal is detected, the passive radio emits/reflects a signal which is specific to the radio ID of the passive radio. In the present disclosure, the terms "passive radio", "tag", "third radio equipment", "third apparatus", "IoT device", and "a-IoT device" may be used interchangeably. It may be noted that example embodiments of the present disclosure are not limited to passive radios; an a-IoT device may also be a semi-passive radio or an active radio.

[0038]  - A reader: a device that listens and detects the passive radio signals from the passive radio. The reader may or may not be collocated with the activator. A reader (radio/device) may be considered a radio that is configured to detect a passive radio or an a-IoT signal (e.g. tag/reply signal). In the present disclosure, the terms "reader", "reader radio", "reader device", "first apparatus", and "first radio equipment" may be used interchangeably.

A RAN level study item was approved and more recently, in RAN#98-e (RP-223396), the following main two types of devices have been identified:

"...In terms of energy storage, the study will consider the following device characteristics:

(Passive) Pure batteryless devices with no energy storage capability at all, and completely dependent on the availability of an external source of energy

(Semi-Passive) Devices with limited energy storage capability that do not need to be replaced or recharged manually.

Device categorization based on corresponding characteristics (e.g. energy source, energy storage capability, passive/active transmission, etc.) may be discussed during the study, in relation with the relevant use cases. The device's peak power consumption shall be limited by its practical form factor for the intended use cases, and shall consider its energy source..."

The objectives of this study item can be grouped into three areas: (i) deployment scenarios; (ii) design targets and (iii) performance assessment. In terms of deployment scenarios, the operation in unlicensed spectrum was highlighted: "...Identify the suitable deployment scenarios and their characteristics, at least for the use cases/services agreed in SA1's "Study on Ambient power-enabled internet of Things", comprising among at least the following aspects

Indoor/outdoor environment

Basestation characteristics, e.g. macro/micro/pico cells-based deployments

Connectivity topologies, including which node(s), e.g. basestation, UE, relay, repeater, etc. can communicate with target devices

TDD/FDD, and frequency bands in licensed or unlicensed spectrum

Coexistence with UEs and infrastructure in frequency bands for existing 3GPP technologies

Device originated and/or device terminated traffic assumption

NOTE: There can be more than one deployment scenario identified for a use case, and a deployment scenario may be common to more than one use case.

NOTE: Where more than one deployment scenario is identified for a use case, the trade-offs between them should also be studied.

NOTE: The study shall not prioritize deployment aspects that should be coordinated with SA, e.g. public or private network, with or without CN connection.

NOTE: A representative use case can be studied for a group of use cases that have similar requirements..."

In RAN#98e & #99, it was agreed to focus on three device types: Device A: Passive device with NO energy storage; Device B: Passive device with energy storage; and Device C: active device with energy storage. The design targets for power consumption are: Device A $\leq$ 10 $\mu$W; Device A < Device B < Device C; and Device C $\leq$ 1 mW. The device complexity design targets are: Device A: Comparable to UHF RFID; Device A $\leq$ Device B $\leq$ Device C; and Device C: Orders-of-magnitude lower than NB-IoT. During RAN#99, the Rapporteur listed the following functionalities that need to be tackled for Ambient IoT in RAN:
"...Rapporteur: Assumptions on potentially required functionality to be supported need to be identified for Ambient IoT in RAN. To avoid detailed WG-level analysis, the potential functionalities are expected to be general and to meet the RAN design targets for Ambient IoT air interface. The following potential assumed RAN functionalities were found in the submitted papers (please refer also to design targets above).

Security (authentication, encryption, data integrity, authorization)

Positioning/localization/ranging

Support of channel access regulations associated with unlicensed spectrum.

Coexistence with legacy systems, devices, and network deployments

Energy harvesting signals, and/or use of legacy signals for energy harvesting

Identification and management of devices

Possibility of CN connection, including for sporadic and opportunistic small data between device and core
Suggest to send LS to SA on feasibility of solutions with/without CN

Backscattering modulation

Envelope detection in receiver

Non-OFDM waveform in DL, robust against low-accuracy receiver architecture

Compact protocol layers design

Anti-collision methods / random access procedure / tag-reaction load distribution

**Interference mitigation (intra-reader, inter-reader, reader - cellular network)**

For topology (1) and (2), gNB/UE/intermediate node may need limited full-duplex capability

Mobility management procedures

Communicate with all, a subset, or one of the Ambient IoT devices present

Activation, deactivation of ambient IoT device

NW configuration of signals and channels for communication with Ambient IoT devices

Control of when tag reflects/reacts to a received signal when addressed

DRX

Synchronization scheme robust against low-accuracy receiver architecture

Coverage enhancement techniques with low device complexity..."

In TR 38.848, the following connectivity topologies for ambient IoT (A-IoT) networks and devices were defined for the purposes of the study. In all these topologies, the ambient IoT device may be provided with a carrier wave from other node(s) either inside or outside the topology. The links in each topology may be bidirectional or unidirectional. Base stations (BS), UE, assisting node, or intermediate node could be multiple BSs or UEs, respectively. The mixture of indoor and outdoor placement of such nodes is regarded as a network implementation choice.

Ambient IoT devices may be described as low power devices, low cost devices, and/or as devices with limited functionality/processing capability. An example of an ambient IoT (A-IoT) device is a passive radio, which may harness energy from wireless signals sent on specific carriers and/or bandwidths and charge a simple circuitry that, once activated, may emit/reflect a signal, which may encode at least the ID of the passive radio. Other examples of A-IoT devices include semi-passive devices, battery-less devices, and low cost simplified mobile devices. A-IoT devices may be used, for example, for indoor/outdoor positioning.

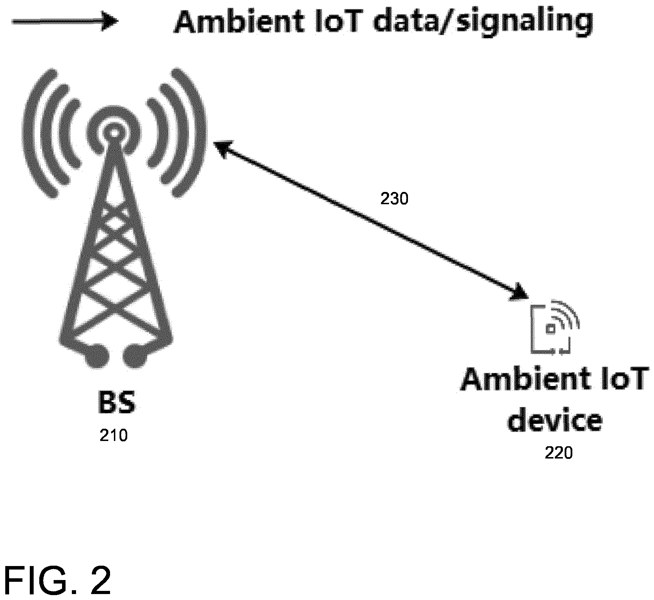

Referring now to FIG. 2, illustrated is an example of Topology 1: BS <-> AIoT device. In Topology 1, the ambient IoT device (220) directly and bidirectionally communicates (230) with a base station (210). The communication between the base station (210) and the ambient IoT device (220) includes ambient IoT data and/or signalling (230). This topology includes the possibility that the BS transmitting to the ambient IoT device is different from the BS receiving from the ambient IoT device.

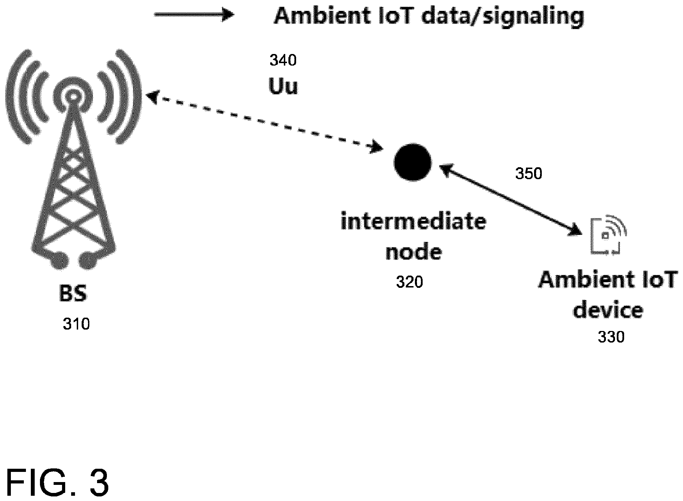

Referring now to FIG. 3, illustrated is an example of Topology 2: BS <-> intermediate node <-> AIoT device. In Topology 2, the ambient IoT device (330) communicates bidirectionally (350) with an intermediate node (320) between the device (330) and the base station (310). In this topology, the intermediate node (320) can be a relay, integrated access and backhaul (IAB) node, UE, repeater, etc. which is capable of ambient IoT. The intermediate node (320) transfers the information (340) between the BS (310) and the ambient IoT device (330).

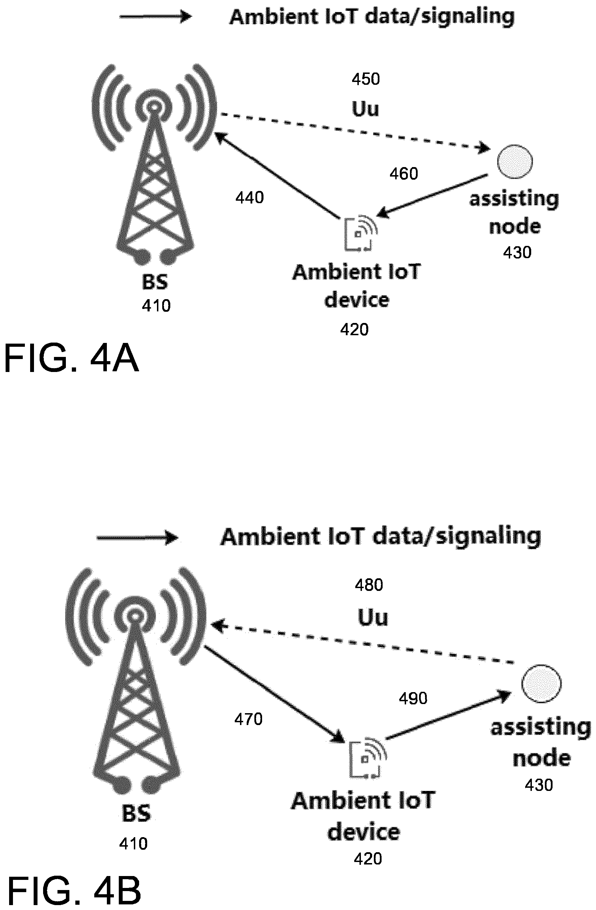

Referring now to FIG. 4, illustrated is an example of Topology 3: BS <-> assisting node <-> AIoT device <-> BS device. In Topology 3, the ambient IoT device (420) transmits data/signaling (440) to a base station (410) and receives data/signaling (460) from the assisting node (430) (as in FIG. 4A); or the ambient IoT device (420) receives data/signaling (470) from a base station (410) and transmits data/signaling (490) to the assisting node (430) (as in FIG. 4B). In this topology, the assisting node (430) can be a relay, IAB, UE, repeater, etc. which is capable of ambient IoT, and either receives data/signaling (450) from the base station (410) (as in FIG. 4A) or transmits data/signaling to the base station (410) (as in FIG. 4B).

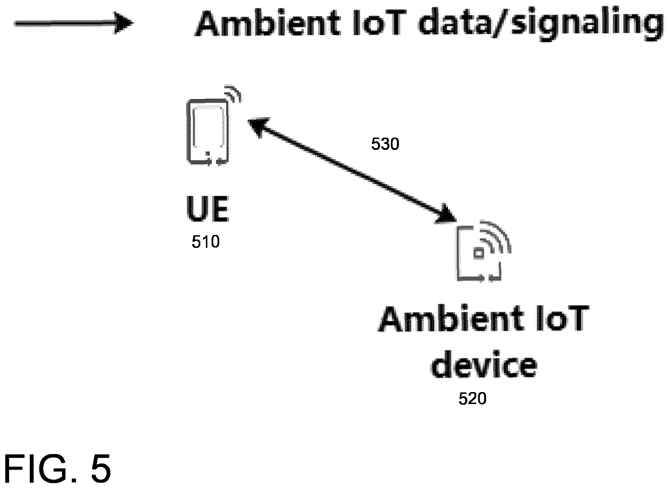

Referring now to FIG. 5, illustrated is an example of Topology 4: UE <-> AIoT device. In Topology 4, the ambient IoT device (520) communicates bidirectionally (530 with a UE (510). The communication (530) between the UE (510) and the ambient IoT device (520) includes ambient IoT data and/or signaling.

Reading an ambient IoT device is a challenging task due to the inherent nature of the tag device. More precisely, the tag does not have an independent power source, is most often mobile, and can hear other radios only in its own proximity (most often with a 5-10 m radius) due to the low complexity receiver. For these reasons, the tags cannot perform typical initial access procedures e.g. paging response, random access and neighbor cell monitoring procedures. Furthermore, introduction of new tags in the area, mobility of tags, data collection and transmission capability should be transparent to the NR NW. Because of the above limitations, the NR NW cannot apply the typical NR UE paging operations, and alternatives need to be defined.

The NR NW can read (i.e. receive/decode data/signaling from) the tag only if the tag hears an activation signal loud enough so that: it can charge sufficiently; and it can generate a signal (in response to the activation signal) which is loud enough to be heard by another nearby NW element (a gNB, RSU, UE, typically located no more than approx. 100 m away etc.).

It is not trivial to enable generation of tag signal that is loud enough. Multiple tags may reply on the same time-frequency resources, thus interfering with each other during their response. This type of interference is called tag-to-tag (TT) interference, and it affects the ability of the reader to distinguish between tags which respond concurrently by using the same time-frequency resources. In addition, tags typically reply/reflect on the same carrier as that used by the activation signal. Since the activation signal may be several orders of magnitude stronger than the tag reply, the phenomenon called activator-to-tag (AT) interference occurs. In other words, the tag reply is drowned by the activation signal, and the reader must be able to isolate the activation signal before attempting to detect the tag.

A technical effect of example embodiments of the present disclosure may be to address the reading of tags suffering from activator-to-tag (AT) interference in a 5G NR NW.

In the present disclosure, the terms "reply signal", "a-IoT (device) signal" and "tag signal" may be used interchangeably.

In an example embodiment, a reader may be enabled to isolate the activation signal from the tag signal. In an example embodiment, the reader may learn and/or anticipate the channel behavior between itself and the activator during a preparation step when the tag remains silent. In an example embodiment, the reader may use the learning/information to determine and/or anticipate a combiner so that the post-processed activation signal and the tag signal are either: lie in orthogonal or isolated spaces; or the activation signal appears suppressed as seen at the reader side. In an example embodiment, the application of the combiner may result in the tag signal becoming distinguishable from the activation signal. In an example embodiment, the combiner may be determined based on full or partial channel knowledge.

In an example embodiment, a preparation step may be included in the tag reading session, in which the activator and reader communicate with each other (i.e. activating the tag, the tag transmitting the reply, and the reader detecting the reply). To this end, a preparation reference signal may need to be exchanged between the activator and reader.

In the present disclosure, the terms "reference signal" and "preparation reference signal" may be used interchangeably.

In an example embodiment, the preparation signaling may happen shortly (e.g. within the channel coherence time) before the tag reading session, for example so that the channel activator-reader acquired during the preparation step may be used to isolate the two signals post-transmission (i.e. the activation signal and the tag reply signal). To determine how fast the reading has to be triggered after the preparation step, a set of pre-configured slots may be reserved for potential activation. The set of pre-configured slots may comprise slot(s) in which an activation signal may be transmitted. Then, a unique slot may be selected for the actual transmission, based on the outcome of the preparation step and the reader's processing capabilities.

In an example embodiment, a reader UE may isolate the activation and tag signals after they have been transmitted. For example, assume a scenario between an activator UE, a reader UE and a tag. The activation signal is denoted $s_a$ and the tag signal is denoted $s$. The activator-reader (ARC) channel response is denoted $h_a$. The tag-reader channel response is denoted $h$. Tag detection may comprise the following: a reference signal is sent at time $t_0$ by the activator to the reader so that the reader can estimate $\widehat{h_a(t_0)}$ and a maximum Doppler shift $\widehat{f_D(t_0)}$. The estimation may use existing state-of-art methods.

In case the quality of the activator-reader channel estimation is not good enough, the reader may trigger the activator to send additional transmissions of the reference signal. This determination can be based on the measured signal to interference plus noise ratio (SINR) (i.e. very low SINR associated with the reference signal may lead to poor estimation) or on the variance of the soft channel estimates (i.e. in case of large variance it may mean that the mean is not guaranteed to be a good point estimate).

Using the estimated $\widehat{h_a(t_0)}, \widehat{f_D(t_0)}$, the reader UE may: schedule the activator for transmission of the activation signal at time $t_1$; and obtain a combiner $\hat{w}(t_1)$ to be applied after the activation signal has been sent at the determined slot $t_1$, for example so that the activation signal and tag signal are aligned away from each other (i.e. isolated).

Assuming that at time $t_1$ the reader receives the signal $y(t_1) \in C^{N_r}$:

$$y(t_1) = h(t_1)s + h_a(t_1)s_a + n(t_1) \quad (1)$$

Where Nr is the number of receive antennas, the first term is the useful tag signal, the second term is the activation signal, and the third term is the additive white Gaussian noise.

The reader may apply the combiner $\hat{w}(t_1)$ to signal $y(t_1)$ to isolate the tag signal:

$$r(t_1) = \widehat{w}(t_1)y(t_1) \quad (2)$$

$$r(t_1) = \widehat{w}(t_1)h(t_1)s + \widehat{w}(t_1)h_a(t_1)s_a + \widehat{w}(t_1)n(t_1) \quad (2.a)$$

The combiner $\widehat{w}(t_1)$ may be obtained: using $\widehat{h_a(t_0)}, \widehat{f_D(t_0)}$; and so that the activation signal is suppressed. A technical effect of example embodiments of the present disclosure may be that the activation power as seen by the reader is minimized.

In an example embodiment, the reader UE may obtain the combiner. The reader UE may first use $\widehat{h_a(t_0)}, \widehat{f_D(t_0)}$ to approximate $\widehat{h_a(t_1)}$:

$$h_a(t_1) = f\left(\widehat{h_a(t_0)}, \widehat{f_D(t_0)}, t_0, t_1\right) \quad (3)$$

Where f represents the reconstruction function that may be obtained by the UE.

In a **first example embodiment,** the reconstruction function may be implemented as a linear interpolation (e.g., robust Wiener filtering).

In a **second example embodiment,** the reader UE may collect samples $\widehat{h_a(t_l)}, l = -1:-L, t_l \leq t_0$ and formulate an autoregressive (AR) model of order P<=L for the channel response. The model parameters are then approximated using the collected past samples. Once the model is obtained, it may be then used to estimate the channel at the current time.

In a **third example embodiment,** the function f may be derived from applying tools from supervised learning (e.g. via neural networks, such as a deep neural network (DNN), convolutional neural network (CNN), etc.) and formulated as a channel prediction regression task, for example using the true channel response $h_a(t_1)$ as a label, and the input $\widehat{h_a(t_0)}, \widehat{f_D(t_0)}, t_0, t_1$, the regressor may compute the parameters $a_i, b_i, i = 1:N$ of a function $f = f_1\left(f_2\left(...f_N\left(\widehat{h_a(t_0)}, \widehat{f_D(t_0)}, t_0, t_1,\right)\right)\right)$, where, for example, $f_i(x) = a_i x + b_i$, so that a distance (e.g. mean squared error) between the estimated channel response and the true one $h_a(t_1)$ is minimized.

In an example embodiment, after the reader UE has approximated $\widehat{h_a(t_1)}$, the reader UE may compute a combiner:

$$\widehat{w}(t_1) = g\left(\widehat{h_a(t_1)}\right) \quad (4)$$

A technical effect of example embodiments of the present disclosure may be minimization of the activation signal.

In a **fourth example embodiment,** the reader UE may approximate the tag channel response $h(t_1)$ using past responses acquired at times t< $t_1$, for example when the tag detection is periodic. Then, instead of choosing a combiner w which supresses the activation signal, the reader UE may compute a combiner w which maximizes the tag to activation signal ratio (i.e., the tag's post-combining signal to interference ratio (SIR)).

In a **fifth example embodiment,** the reader may use partial channel information and adjust the current combiner. For example, the reader may use information about the difference between $h(t_0)$ and $h(t_1)$ to directly adjust the combiner $w(t_0)$ to a value $w(t_1)$. For example, if the combiner at time t is derived using (4), and the reader has obtained a function z which approximates the relation between $h(t_0)$ and $h(t_1)$, i.e. , $h(t_1) \approx z(h(t_0))$, then the reader may use (4) and z to learn a direct relationship between $w(t_0)$ and $w(t_1)$ i.e., $w(t_1) = q(w(t_0), t_1, t_0)$. The learning may target determining the parameters of the function w, for example so that the relationship between the current and past combiners may be well described. The learning may be realized by applying tools from supervised learning (e.g. deep neural networks) or reinforcement learning.

A neural network (NN) is a computation graph consisting of two or more layers of computation. Each layer may consist of one or more units, where each unit may perform an elementary computation. A unit may be connected to one or more other units, and the connection may have a weight associated with it. The weight may be used for scaling the signal passing through the associated connection. Weights may be learnable parameters, i.e., values which can be learned from training data. There may be other learnable parameters, such as those of batch-normalization layers.

Two of the most widely used architectures for neural networks are feed-forward and recurrent architectures. Feed-forward neural networks do not comprise a feedback loop; each layer takes input from one or more of the previous layers and provides output, which is used as the input for one or more of the subsequent layers. Units within a layer take input from unit(s) in one or more preceding layers, and provide output to unit(s) of one or more following layers.

Initial layers, i.e. layers close to the input data, extract semantically low-level features from received data, and intermediate and final layers extract more high-level features. After the feature extraction layers there may be one or more layers performing a certain task, such as classification, semantic segmentation, object detection, denoising, style transfer, super-resolution, etc. In recurrent neural networks, there is a feedback loop, so that the network becomes stateful, i.e., it is able to memorize or retain information or a state.

Neural networks, and other machine learning tools, may be able to learn properties from input data, either in a supervised way or in an unsupervised way. Such learning may be the result of a training algorithm, or of a meta-level neural network providing a training signal.

A training algorithm may consist of changing some properties of the neural network so that the output of the neural network is as close as possible to a desired output. Training may comprise changing properties of the neural network so as to minimize or decrease the output's error, also referred to as the loss. Examples of losses include mean squared error (MSE), cross-entropy, etc. In recent deep learning techniques, training is an iterative process, where, at each iteration, the algorithm modifies the weights of the neural network to make a gradual improvement of the network's output, i.e., to gradually decrease the loss.

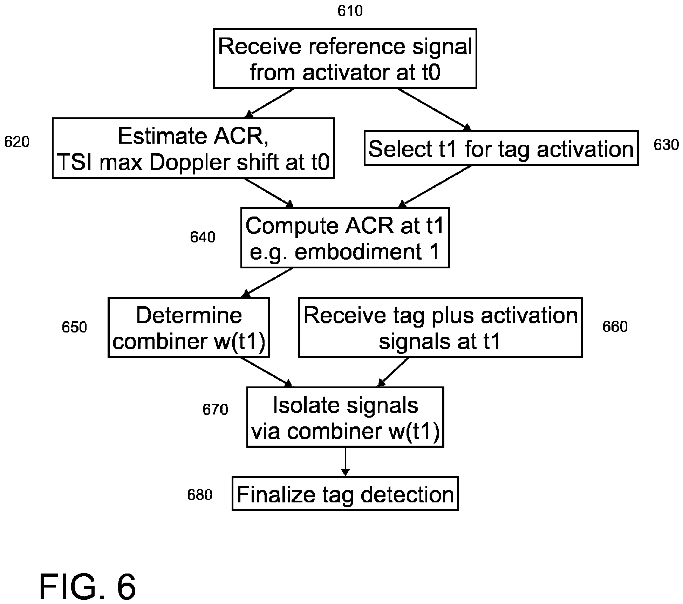

Referring now to FIG. 6, illustrated is a signaling flow chart according to the example of the first example embodiment. At 610, the reader may receive a reference signal from the activator at time t0. At 620, the reader may estimate ACR, time-selectivity information (TSI), and maximum Doppler shift at t0. At 630, the reader may select time t1 for tag activation (i.e. transmission of the activation signal from the activator to the tag). At 640, the reader may compute ACR at t1 (e.g. according to the first example embodiment). At 650, the reader may determine the combiner w(t1) based, at least partially, on the computed ACR at t1. At 660, the reader may receive the tag reply signal and the activation signal at time t1. At 670, the reader may isolate signals via combiner w(t1). At 680, the reader may finalize tag detection.

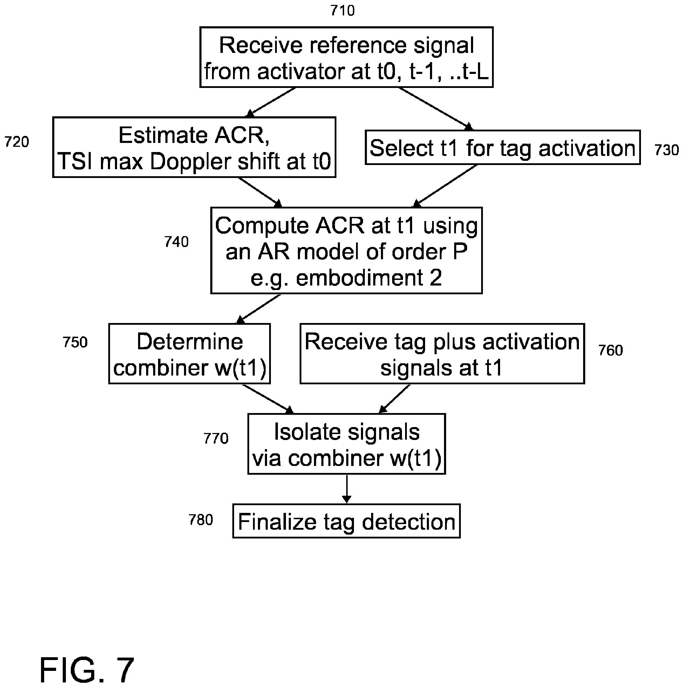

Referring now to FIG. 7, illustrated is a signaling flow chart according to the example of the second example embodiment. At 710, the reader may receive a reference signal from the activator at, for example, times t0, t-1,...,t-L. At 720, the reader may estimate ACR, TSI, and max doppler shift at t0. At 730, the reader may select time t1 for tag activation. At 740, the reader may compute ACR at t1 using an AR model of order P (e.g. according to the second example embodiment). At 750, the reader may determine the combiner w(t1) based, at least partially, on the computed ACR at t1. At 760, the reader may receive the tag reply signal and the activation signal at time t1. At 770, the reader may isolate signals via combiner w(t1). At 780, the reader may finalize tag detection.

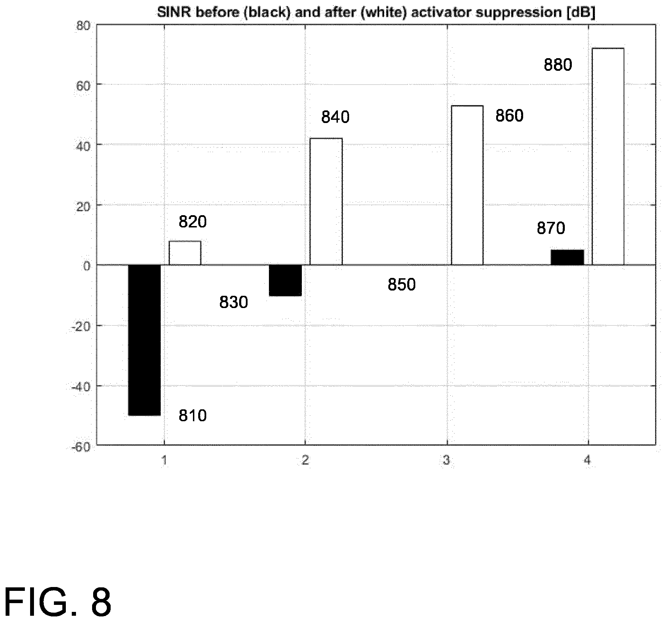

Referring now to FIG. 8, illustrated is an example of SINR of the tag before (810, 830, 850, 870) and after (820, 840, 860, 880) post-alignment of the activation signal, which may illustrate a potential technical effect of example embodiments of the present disclosure (i.e. aligning the activation signal away from the tag signal via a zero-forcing combiner determination and application in the reader). In the example of FIG. 8, the reader may be equipped with 64 receive antennas. It may be observed that the isolation (e.g. orthogonalization) may be successful even in very low tag-to-activation SINR regimes. For example, for tag SINR of -50 dB, the application of the combiner at the reader may increase the post-processing SINR to 5 dB. Note that, for simplicity, FIG. 8 considers ideal ARC acquisition at the reader.

Example embodiments of the present disclosure may be implemented with respect to IAB nodes. An IAB node consists, logically, of a Mobile Termination (MT) (e.g. IAB MT) that communicates with upstream nodes, and a RAN component, such as a Distributed Unit (DU) (e.g. IAB DU), that communicates with downstream IAB nodes or subscriber UEs 110. In NR/5G, a gNB may comprise a split architecture in which a centralized unit (CU) and a distributed unit (DU) each perform a subset of the functionalities of the gNB. In other words, the MT part of an IAB node may be used to communicate with a parent node, and the DU part of an IAB node may be used to communicate with a child node or UE. A mobile termination (MT) of an IAB node may communicate with a parent node, such as IAB donor. The IAB donor may comprise the centralized unit of the gNB and may also comprise the distributed unit. A distributed unit (DU) of an IAB node may communicate with a child node or a user equipment.

Example embodiments of the present disclosure may be implemented with respect to SL devices. SL devices may be used to provide communication between a vehicle and a network, infrastructure(s), other vehicle(s), or other road user(s) in the surrounding/immediate area. Such communication may enable proximity service (ProSe), or transmission of information about the surrounding environment, between devices in close proximity, for example device-to-device (D2D) communication technology. Such direct communication may be available even when network coverage is unavailable. Additionally or alternatively, NR SL methods may be implemented in scenarios unrelated to traffic users, such as public safety scenarios and/or commercial scenarios. SL use cases may relate to Internet of Things (IoT) and automotive industries (e.g., for reduction of accident risk and safer driving experiences). These use cases may include a message exchange among vehicles (V2V), vehicles and pedestrians (V2P), vehicles and infrastructure (V2I) and vehicles and networks (V2N), and may be referred to as vehicle-to-everything (V2X). The allocation of V2V resources in cellular, i.e., time and frequency resources, can be either controlled by the cellular network structure or performed autonomously by the individual vehicles (e.g. UE devices thereof). Sidelink may use same or different carrier frequencies or frequency bands than cellular communication.

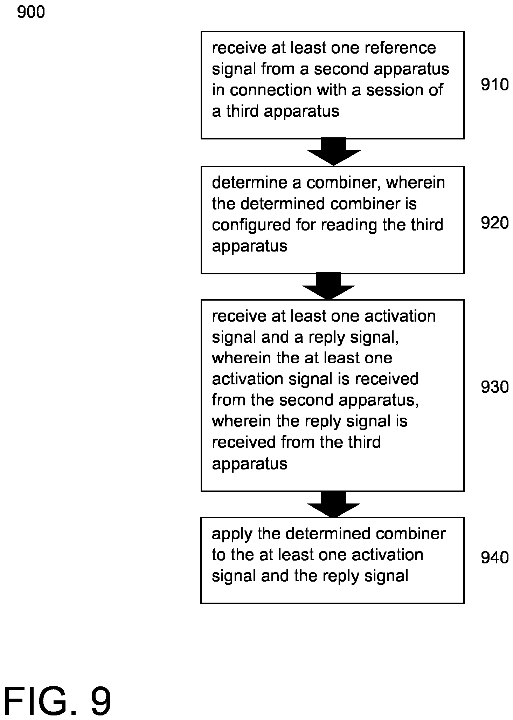

FIG. 9 illustrates the potential steps of an example method 900. The example method 900 may include: receiving at least one reference signal from a second apparatus in connection with a session of a third apparatus, 910; determining a combiner, wherein the determined combiner is configured for reading the third apparatus, 920; receiving, at a second time, at least one activation signal and a reply signal, wherein the at least one activation signal is received from the second apparatus, wherein the reply signal is received from the third apparatus, 930; and applying the determined combiner to the at least one activation signal and the reply signal, 940. The example method 900 may be performed, for example, with a reader UE, a radio that is configured to detect a passive radio, an IoT signal, or an a-IoT signal (e.g. tag/reply signal), a reader radio, a reader device, a first apparatus, a first radio equipment, etc. The third apparatus may be, for example, a passive radio, a tag, an IoT device, an a-IoT device, etc.

In accordance with one example embodiment, an apparatus may comprise: at least one processor; and at least one memory storing instructions that, when executed by the at least one processor, cause the apparatus at least to: receive at least one reference signal from a second apparatus in connection with a session of a third apparatus; determine a combiner, wherein the determined combiner may be configured for reading the third apparatus; receive at least one activation signal and a reply signal, wherein the at least one activation signal is received from the second apparatus, wherein the reply signal may be received from the third apparatus; and apply the determined combiner to the at least one activation signal and the reply signal.

The example apparatus may comprise a reader.

The second apparatus may comprise an activator.

The third apparatus may comprise an ambient Internet of Things device.

The determined combiner may be configured to at least one of: minimize a contribution of at least one activation signal in a channel towards the second apparatus, or isolate the at least one activation signal in the channel towards the second apparatus.

The example apparatus may be further configured to: determine one or more first conditions of a channel towards the second apparatus, wherein the combiner may be determined based, at least partially, on the one or more first conditions.

The one or more first conditions may be determined based, at least partially, on the at least one reference signal.

The one or more first conditions may comprise at least one of: a channel response of the channel towards the second apparatus at a time at which the at least one reference signal is received, a doppler shift at the time at which the at least one reference signal is received, a signal to interference plus noise ratio at the time at which the at least one reference signal is received, or a variance of at least one estimate of the channel towards the second apparatus.

The example apparatus may be further configured to: determine a time at which the at least one activation signal and the reply signal are received based, at least partially, on the one or more first conditions.

The time at which the at least one activation signal and the reply signal are received may be determined based, at least partially, on the at least one reference signal.

Determining the combiner may comprise the example apparatus being further configured to: determine one or more second conditions of the channel towards the second apparatus at a time at which the at least one activation signal and the reply signal are received based, at least partially, on the one or more first conditions and a reconstruction function; and determine the combiner based, at least partially, on the one or more second conditions.

The reconstruction function may comprise at least one of: a linear interpolation function, or robust Wiener filtering.

The reconstruction function may comprise a channel prediction task performed with a model.

Determining the combiner may comprise the example apparatus being further configured to: determine one or more second conditions of the channel towards the second apparatus at one or more times earlier than or equal to a time at which the at least one reference signal is received; estimate one or more third conditions of the channel towards the second apparatus at a time at which the at least one activation signal and the reply signal are received, using an autoregressive model, based, at least partially, on the one or more first conditions and the one or more second conditions; and determine the combiner based, at least partially, on the one or more estimated third conditions of the channel towards the second apparatus.

Determining the combiner may comprise the example apparatus being further configured to: determine one or more second conditions of the channel towards the second apparatus at one or more times earlier than a time at which the at least one activation signal and the reply signal are received; estimate one or more third conditions of the channel towards the second apparatus at the time at which the at least one activation signal and the reply signal are received based, at least partially, on the one or more second conditions; and determine the combiner based, at least partially, on the one or more third conditions, wherein the determined combiner may be configured to maximize a quality of a reception of the reply signal.

The ratio between the reply signal and the at least one activation signal may comprise a signal to interference ratio associated with the third apparatus.

Determining the combiner may comprise the example apparatus being further configured to: determine a first combiner for a time at which the at least one reference signal is received; estimate a difference between the one or more first conditions and one or more second conditions of the channel towards the second apparatus at a time at which the at least one activation signal and the reply signal are received based, at least partially, on partial channel information; and adjust the first combiner based, at least partially, on the estimated difference, wherein the determined combiner comprises the adjusted combiner.

In accordance with one aspect, an example method may be provided comprising: receiving, with a first apparatus, at least one reference signal from a second apparatus in connection with a session of a third apparatus; determining a combiner, wherein the determined combiner may be configured for reading the third apparatus; receiving at least one activation signal and a reply signal, wherein the at least one activation signal is received from the second apparatus, wherein the reply signal may be received from the third apparatus; and applying the determined combiner to the at least one activation signal and the reply signal.

The first apparatus may comprise a reader.

The second apparatus may comprise an activator.

The third apparatus may comprise an ambient Internet of Things device.

The determined combiner may be configured to at least one of: minimize a contribution of at least one activation signal in a channel towards the second apparatus, or isolate the at least one activation signal in the channel towards the second apparatus.

The example method may further comprise: determining one or more first conditions of a channel towards the second apparatus, wherein the combiner may be determined based, at least partially, on the one or more first conditions.

The one or more first conditions may be determined based, at least partially, on the at least one reference signal.

The one or more first conditions may comprise at least one of: a channel response of the channel towards the second apparatus at a time at which the at least one reference signal is received, a doppler shift at the time at which the at least one reference signal is received, a signal to interference plus noise ratio at the time at which the at least one reference signal is received, or a variance of at least one estimate of the channel towards the second apparatus.

The example method may further comprise: determining a time at which the at least one activation signal and the reply signal are received based, at least partially, on the one or more first conditions.

The time at which the at least one activation signal and the reply signal are received may be determined based, at least partially, on the at least one reference signal.

The determining of the combiner may comprise: determining one or more second conditions of the channel towards the second apparatus at a time at which the at least one activation signal and the reply signal are received based, at least partially, on the one or more first conditions and a reconstruction function; and determining the combiner based, at least partially, on the one or more second conditions.

The reconstruction function may comprise at least one of: a linear interpolation function, or robust Wiener filtering.

The reconstruction function may comprise a channel prediction task performed with a model.

The determining of the combiner may comprise: determining one or more second conditions of the channel towards the second apparatus at one or more times earlier than or equal to a time at which the at least one reference signal is received; estimating one or more third conditions of the channel towards the second apparatus at a time at which the at least one activation signal and the reply signal are received, using an autoregressive model, based, at least partially, on the one or more first conditions and the one or more second conditions; and determining the combiner based, at least partially, on the one or more estimated third conditions of the channel towards the second apparatus.

The determining of the combiner may comprise: determining one or more second conditions of the channel towards the second apparatus at one or more times earlier than a time at which the at least one activation signal and the reply signal are received; estimating one or more third conditions of the channel towards the second apparatus at the time at which the at least one activation signal and the reply signal are received based, at least partially, on the one or more second conditions; and determining the combiner based, at least partially, on the one or more third conditions, wherein the determined combiner is configured to maximize a quality of a reception of the reply signal.

The ratio between the reply signal and the at least one activation signal may comprise a signal to interference ratio associated with the third apparatus.

The determining of the combiner may comprise: determining an a first combiner for a time at which the at least one reference signal is received; estimating a difference between the one or more first conditions and one or more second conditions of the channel towards the second apparatus at a time at which the at least one activation signal and the reply signal are received based, at least partially, on partial channel information; and adjusting the first combiner based, at least partially, on the estimated difference, wherein the determined combiner comprises the adjusted combiner.

In accordance with one example embodiment, an apparatus may comprise: circuitry configured to perform:

receiving at least one reference signal from a second apparatus in connection with a session of a third apparatus; circuitry configured to perform: determining a combiner, wherein the determined combiner may be configured for reading the third apparatus; circuitry configured to perform: receiving at least one activation signal and a reply signal, wherein the at least one activation signal is received from the second apparatus, wherein the reply signal may be received from the third apparatus; and circuitry configured to perform: applying the determined combiner to the at least one activation signal and the reply signal.

In accordance with one example embodiment, an apparatus may comprise: processing circuitry; memory circuitry including computer program code, the memory circuitry and the computer program code configured to, with the processing circuitry, enable the apparatus to: receive at least one reference signal from a second apparatus in connection with a session of a third apparatus; determine a combiner, wherein the determined combiner may be configured for reading the third apparatus; receive at least one activation signal and a reply signal, wherein the at least one activation signal is received from the second apparatus, wherein the reply signal may be received from the third apparatus; and apply the determined combiner to the at least one activation signal and the reply signal.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: receiving at least one reference signal from a second apparatus in connection with a session of a third apparatus; determining a combiner, wherein the determined combiner is configured for reading the third apparatus; receiving at least one activation signal and a reply signal, wherein the at least one activation signal is received from the second apparatus, wherein the reply signal is received from the third apparatus; and applying the determined combiner to the at least one activation signal and the reply signal.

The apparatus may comprise a reader.

The second apparatus may comprise an activator.

The third apparatus may comprise an ambient Internet of Things device.

The determined combiner is configured to at least one of: minimize a contribution of at least one activation signal in a channel towards the second apparatus, or isolate the at least one activation signal in the channel towards the second apparatus.

The means may be further configured for: determining one or more first conditions of a channel towards the second apparatus, wherein the combiner may be determined based, at least partially, on the one or more first conditions.

The one or more first conditions may be determined based, at least partially, on the at least one reference signal.

The one or more first conditions may comprise at least one of: a channel response of the channel towards the second apparatus at a time at which the at least one reference signal is received, a doppler shift at the time at which the at least one reference signal is received, a signal to interference plus noise ratio at the time at which the at least one reference signal is received, or a variance of at least one estimate of the channel towards the second apparatus.

The means may be further configured for: determining a time at which the at least one activation signal and the reply signal are received based, at least partially, on the one or more first conditions.

The time at which the at least one activation signal and the reply signal are received may be determined based, at least partially, on the at least one reference signal.

The means configured for determining the combiner may comprise means configured for: determining one or more second conditions of the channel towards the second apparatus at a time at which the at least one activation signal and the reply signal are received based, at least partially, on the one or more first conditions and a reconstruction function; and determining the combiner based, at least partially, on the one or more second conditions.

The reconstruction function may comprise at least one of: a linear interpolation function, or robust Wiener filtering.

The reconstruction function may comprise a channel prediction task performed with a model.

The means configured for determining the combiner may comprise means configured for: determining one or more second conditions of the channel towards the second apparatus at one or more times earlier than or equal to a time at which the at least one reference signal is received; estimating one or more third conditions of the channel towards the second apparatus at a time at which the at least one activation signal and the reply signal are received, using an autoregressive model, based, at least partially, on the one or more first conditions and the one or more second conditions; and determining the combiner based, at least partially, on the one or more estimated third conditions of the channel towards the second apparatus.

The means configured for determining the combiner may comprise means configured for: determining one or more second conditions of the channel towards the second apparatus at one or more times earlier than a time at which the at least one activation signal and the reply signal are received; estimating one or more third conditions of the channel towards the second apparatus at the time at which the at least one activation signal and the reply signal are received based, at least partially, on the one or more second conditions; and determining the combiner based, at least partially, on the one or more third conditions, wherein the determined combiner may be configured to maximize a quality of a reception of the reply signal.

The ratio between the reply signal and the at least one activation signal may comprise a signal to interference ratio associated with the third apparatus.

The means configured for determining the combiner comprises means configured for: determining a first combiner for a time at which the at least one reference signal is received; estimating a difference between the one or more first conditions and one or more second conditions of the channel towards the second apparatus at a time at which the at least one activation signal and the reply signal are received based, at least partially, on partial channel information; and adjusting the first combiner based, at least partially, on the estimated difference, wherein the determined combiner may comprise the adjusted combiner.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause receiving of at least one reference signal from a second apparatus in connection with a session of a third apparatus; determine a combiner, wherein the determined combiner is configured for reading the third apparatus; cause receiving of at least one activation signal and a reply signal, wherein the at least one activation signal is received from the second apparatus, wherein the reply signal is received from the third apparatus; and apply the determined combiner to the at least one activation signal and the reply signal.

In accordance with one example embodiment, a non-transitory computer-readable medium comprising program instructions stored thereon for performing at least the following: causing receiving of at least one reference signal from a second apparatus in connection with a session of a third apparatus; determining a combiner, wherein the determined combiner is configured for reading the third apparatus; causing receiving of at least one activation signal and a reply signal, wherein the at least one activation signal is received from the second apparatus, wherein the reply signal is received from the third apparatus; and applying the determined combiner to the at least one activation signal and the reply signal.

In accordance with another example embodiment, a non-transitory program storage device readable by a machine may be provided, tangibly embodying instructions executable by the machine for performing operations, the operations comprising: causing receiving of at least one reference signal from a second apparatus in connection with a session of a third apparatus; determining a combiner, wherein the determined combiner is configured for reading the third apparatus; causing receiving of at least one activation signal and a reply signal, wherein the at least one activation signal is received from the second apparatus, wherein the reply signal is received from the third apparatus; and applying the determined combiner to the at least one activation signal and the reply signal.

In accordance with another example embodiment, a non-transitory computer-readable medium comprising instructions that, when executed by an apparatus, cause the apparatus to perform at least the following: causing receiving of at least one reference signal from a second apparatus in connection with a session of a third apparatus; determining a combiner, wherein the determined combiner is configured for reading the third apparatus; causing receiving of at least one activation signal and a reply signal, wherein the at least one activation signal is received from the second apparatus, wherein the reply signal is received from the third apparatus; and applying the determined combiner to the at least one activation signal and the reply signal.

A computer implemented system comprising: at least one processor and at least one non-transitory memory storing instructions that, when executed by the at least one processor, cause the system at least to perform: causing receiving of at least one reference signal from a second apparatus in connection with a session of a third apparatus; determining a combiner, wherein the determined combiner is configured for reading the third apparatus; causing receiving of at least one activation signal and a reply signal, wherein the at least one activation signal is received from the second apparatus, wherein the reply signal is received from the third apparatus; and applying the determined combiner to the at least one activation signal and the reply signal.

A computer implemented system comprising: means for causing receiving of at least one reference signal from a second apparatus in connection with a session of a third apparatus; means for determining a combiner, wherein the determined combiner is configured for reading the third apparatus; means for causing receiving of at least one activation signal and a reply signal, wherein the at least one activation signal is received from the second apparatus, wherein the reply signal is received from the third apparatus; and means for applying the determined combiner to the at least one activation signal and the reply signal.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

**Claims**

1. A method comprising:

   receiving, with a first apparatus, at least one reference signal from a second apparatus in connection with a session of a third apparatus;
   determining a combiner, wherein the determined combiner is configured for reading the third apparatus;
   receiving at least one activation signal and a reply signal, wherein the at least one activation signal is received from the second apparatus, wherein the reply signal is received from the third apparatus; and
   applying the determined combiner to the at least one activation signal and the reply signal.

2. An apparatus comprising means for:

   receiving at least one reference signal from a second apparatus in connection with a session of a third apparatus;
   determining a combiner, wherein the determined combiner is configured for reading the third apparatus;
   receiving at least one activation signal and a reply signal, wherein the at least one activation signal is received from the second apparatus, wherein the reply signal is received from the third apparatus; and applying the determined combiner to the at least one activation signal and the reply signal.

3. The apparatus of claim 2, wherein the apparatus comprises a reader, and/or the second apparatus comprises an activator and/or the third apparatus comprises an ambient Internet of Things device.

4. The apparatus of claims 2 or 3, wherein the determined combiner is configured to at least one of:

   minimize a contribution of at least one activation signal in a channel towards the second apparatus, or
   isolate the at least one activation signal in the channel towards the second apparatus.

5. The apparatus of any of claims 2 through 4, wherein the means are further configured for:
   determining one or more first conditions of a channel towards the second apparatus, wherein the combiner is determined based, at least partially, on the one or more first conditions.

6. The apparatus of claim 5, wherein the one or more first conditions are determined based, at least partially, on the at least one reference signal.

7. The apparatus of claim 5 or 6, wherein the one or more first conditions comprises at least one of:

   a channel response of the channel towards the second apparatus at a time at which the at least one reference signal is received,
   a doppler shift at the time at which the at least one reference signal is received,
   a signal to interference plus noise ratio at the time at which the at least one reference signal is received, or
   a variance of at least one estimate of the channel towards the second apparatus.

8. The apparatus of any of claims 5 through 7, wherein the means are further configured for:
   determining a time at which the at least one activation signal and the reply signal are received based, at least partially, on the one or more first conditions.

9. The apparatus of any of claims 5 through 8, wherein the means configured for determining the combiner comprises means configured for:

> determining one or more second conditions of the channel towards the second apparatus at a time at which the at least one activation signal and the reply signal are received based, at least partially, on the one or more first conditions and a reconstruction function; and
> determining the combiner based, at least partially, on the one or more second conditions.

10. The apparatus of claim 9, wherein the reconstruction function comprises at least one of:

> a linear interpolation function, or
> robust Wiener filtering.

11. The apparatus of claim 9, wherein the reconstruction function comprises a channel prediction task performed with a model.

12. The apparatus of any of claims 5 through 8, wherein the means configured for determining the combiner comprises means configured for:

> determining one or more second conditions of the channel towards the second apparatus at one or more times earlier than or equal to a time at which the at least one reference signal is received;
> estimating one or more third conditions of the channel towards the second apparatus at a time at which the at least one activation signal and the reply signal are received, using an autoregressive model, based, at least partially, on the one or more first conditions and the one or more second conditions; and
> determining the combiner based, at least partially, on the one or more estimated third conditions of the channel towards the second apparatus.

13. The apparatus of any of claims 5 through 8, wherein the means configured for determining the combiner comprises means configured for:

> determining one or more second conditions of the channel towards the second apparatus at one or more times earlier than a time at which the at least one activation signal and the reply signal are received;
> estimating one or more third conditions of the channel towards the second apparatus at the time at which the at least one activation signal and the reply signal are received based, at least partially, on the one or more second conditions; and
> determining the combiner based, at least partially, on the one or more third conditions, wherein the determined combiner is configured to maximize a quality of a reception of the reply signal.

14. The apparatus of claim 13, wherein the ratio between the reply signal and the at least one activation signal comprises a signal to interference ratio associated with the third apparatus.

15. The apparatus of any of claims 5 through 8, wherein the means configured for determining the combiner comprises means configured for:

> determining a first combiner for a time at which the at least one reference signal is received;
> estimating a difference between the one or more first conditions and one or more second conditions of the channel towards the second apparatus at a time at which the at least one activation signal and the reply signal are received based, at least partially, on partial channel information; and
> adjusting the first combiner based, at least partially, on the estimated difference, wherein the determined combiner comprises the adjusted combiner.

FIG.1

Ambient IoT data/signaling

230

BS
210

Ambient IoT
device
220

FIG. 2

Ambient IoT data/signaling

340

Uu

BS
310

intermediate
node
320

Ambient IoT
device
330

350

FIG. 3

→ Ambient IoT data/signaling

450
Uu

460

440

assisting
node
430

BS
410

Ambient IoT
device
420

# FIG. 4A

→ Ambient IoT data/signaling

480
Uu

490

470

assisting
node
430

BS
410

Ambient IoT
device
420

# FIG. 4B

→ Ambient IoT data/signaling

UE
510

530

Ambient IoT
device
520

FIG. 5

610

Receive reference signal
from activator at t0

620

Estimate ACR,
TSI max Doppler shift at t0

Select t1 for tag activation 630

640 Compute ACR at t1
e.g. embodiment 1

650 Determine
combiner w(t1)

Receive tag plus activation
signals at t1 660

670 Isolate signals
via combiner w(t1)

680 Finalize tag detection

FIG. 6

710

Receive reference signal
from activator at t0, t-1, ..t-L

720 Estimate ACR,
TSI max Doppler shift at t0

Select t1 for tag activation 730

740 Compute ACR at t1 using
an AR model of order P
e.g. embodiment 2

750 Determine
combiner w(t1)

Receive tag plus activation
signals at t1 760

770 Isolate signals
via combiner w(t1)

780 Finalize tag detection

FIG. 7

SINR before (black) and after (white) activator suppression [dB]

FIG. 8

900

receive at least one reference
signal from a second apparatus
in connection with a session of
a third apparatus

910

determine a combiner, wherein
the determined combiner is
configured for reading the third
apparatus

920

receive at least one activation
signal and a reply signal,
wherein the at least one
activation signal is received
from the second apparatus,
wherein the reply signal is
received from the third
apparatus

930

apply the determined combiner
to the at least one activation
signal and the reply signal

940

# FIG. 9

Europäisches
Patentamt

European
Patent Office

Office européen
des brevets

# EUROPEAN SEARCH REPORT

**Application Number**

EP 24 19 7135

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YANG GANG ET AL: "Cooperative Ambient Backscatter Communications for Green Internet-of-Things", IEEE INTERNET OF THINGS JOURNAL, IEEE, USA, vol. 5, no. 2, 1 April 2018 (2018-04-01), pages 1116-1130, XP011680858, DOI: 10.1109/JIOT.2018.2799848 [retrieved on 2018-04-09] * abstract; figure 1 * * page 1117 - page 1119 * ----- | 1-15 | INV. H04B1/10 H04B5/00 H04B7/00 |
| X | GUO HUAYAN ET AL: "Exploiting Multiple Antennas for Cognitive Ambient Backscatter Communication", IEEE INTERNET OF THINGS JOURNAL, IEEE, USA, vol. 6, no. 1, 1 February 2019 (2019-02-01), pages 765-775, XP011711636, DOI: 10.1109/JIOT.2018.2856633 [retrieved on 2019-02-22] * the whole document * ----- | 1-15 | |
| X | NIU ZHIANG ET AL: "Spatial modulation-based ambient backscatter: Bringing energy self-sustainability to massive internet of everything in 6G", CHINA COMMUNICATIONS, CHINA INSTITUTE OF COMMUNICATIONS, PISCATAWAY, NJ, USA, vol. 17, no. 12, 1 December 2020 (2020-12-01), pages 52-65, XP011829297, ISSN: 1673-5447, DOI: 10.23919/JCC.2020.12.004 [retrieved on 2021-01-04] * abstract; figure 1 * ----- | 1-15 | TECHNICAL FIELDS SEARCHED (IPC)  H04B |

The present search report has been drawn up for all claims

| Place of search | Date of completion of the search | Examiner |
|---|---|---|
| Munich | 17 December 2024 | Almenar Muñoz, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................
& : member of the same patent family, corresponding document

EPO FORM 1503 03.82 (P04C01)